# EUROPEAN PATENT APPLICATION

(11) **EP 4 841 687 A1**
(43) Date of publication of application: **18.11.2026**
(21) Application number: 24916785.9
(22) Date of filing: 30.12.2024
(51) Int. Cl.: H01M 4/13

(54) **BATTERY ELECTRODE SHEET, BATTERY, AND ELECTRIC DEVICE**

(30) Priority: 08.01.2024 CN 202410025462
(71) Applicant: Shenzhen Highpower Technology Co., Ltd., Shenzhen, Guangdong 518000 (CN)
(72) Inventor: LIU, Canzheng, Shenzhen, Guangdong 518000 (CN); GE, Chongyong, Shenzhen, Guangdong 518000 (CN); HAN, Xiaohui, Shenzhen, Guangdong 518000 (CN); LIAO, Xingqun, Shenzhen, Guangdong 518000 (CN)
(74) Representative: Herrero & Asociados, S.L.
(86) International application number: PCT/CN2024/143757
(87) International publication number: WO 2025/148738

(57) **Abstract**

An electrode sheet, including a current collector (1), a first bottom coating layer (3), a first insulating layer (2), a first active substance layer (4), and a second active substance layer (7). The first bottom coating layer (3) and the first insulating layer (2) are disposed side by side on one side of the current collector (1), an edge of the first bottom coating layer (3) abuts against an edge of the first insulating layer (2), the first insulating layer (2) includes a thinned portion (23) at an abutting position, and a thickness of the thinned portion (23) of the first insulating layer (2) is equal to a thickness of the first bottom coating layer (3); the thickness of the thinned portion (23) of the first insulating layer (2) is equal to the thickness of the first bottom coating layer (3), low battery capacity is avoided, intercalation and deintercalation of lithium ions during charge and discharge are not affected, lithium plating of the battery is not caused, and brittle fracture of the electrode sheet is not caused.

## Description

The present application is based on and claims the priority of Chinese Patent Application No. 202410025462.2, titled "Electrode sheet, battery, and electrical device", filed on January 8, 2024.

### TECHNICAL FIELD

The present application relates to the technical field of batteries, and particularly to an electrode sheet, a battery, and an electrical device.

### BACKGROUND

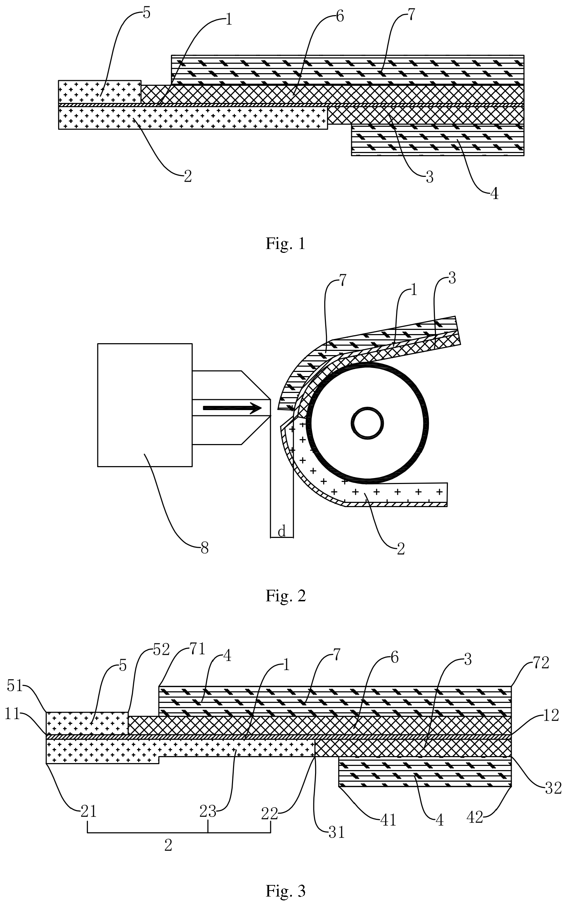

As shown in Figs. 1-2, in the prior art, the thicknesses of insulating layers on both sides of an electrode sheet are required to be greater than thicknesses of bottom coating layers on corresponding sides. However, when an active substance layer is coated on such an electrode sheet structure by using an extrusion coating device, the extrusion coating device regulates an areal density of the active substance layer by allowing slurry to flow through an outlet slit of a coating die head and a gap d between the coating die head and a substrate under a certain pressure and a certain flow rate Q. When the active substance layer is coated on a side close to the outlet slit of the coating die head, the thickness of the insulating layer on a side away from the outlet slit of the coating die head is greater than the thickness of the bottom coating layer, resulting in a relatively small coating weight of the active substance layer in a portion opposite the insulating layer, thereby causing low battery capacity and low energy density. Meanwhile, because the thickness of the insulating layer on the side away from the outlet slit of the coating die head is greater than the thickness of the bottom coating layer, the portion is subjected to a relatively high rolling pressure, resulting in an excessively high compaction density of the active substance layer in this portion, affecting intercalation and deintercalation of lithium ions during charge and discharge, leading to a lithium plating issue in the battery, and also causing brittle fracture of the electrode sheet. Therefore, overcoming the above technical problems and defects has become an issue to be addressed.

### SUMMARY

In view of the problems that, in an existing electrode sheet in which a thickness of an insulating layer is greater than a thickness of a bottom coating layer, low battery capacity density is caused, lithium plating of a battery is likely to be caused during intercalation and deintercalation of lithium ions in charge and discharge, and brittle fracture of the electrode sheet is caused, the present application provides an electrode sheet, a battery, and an electrical device.

The technical solution adopted by the present application to solve the above technical problems is as follows.

In one aspect, the present application provides an electrode sheet, including a current collector, a first bottom coating layer, a first insulating layer, a first active substance layer, and a second active substance layer; the first bottom coating layer and the first insulating layer are disposed side by side on one side of the current collector, an edge of the first bottom coating layer abuts against an edge of the first insulating layer, the first insulating layer includes a thinned portion at an abutting position, a thickness of the thinned portion is smaller than an average thickness of the first insulating layer at a non-abutting position, the thickness of the thinned portion of the first insulating layer is flush with a thickness of the first bottom coating layer, the first active substance layer is disposed on a side of the first bottom coating layer away from the current collector; the second active substance layer is disposed on the other side of the current collector, and a projection of the second active substance layer on the current collector covers projections of the thinned portion and the first bottom coating layer on the current collector.

Optionally, a second bottom coating layer and a second insulating layer are disposed side by side on the other side of the current collector, an edge of the second bottom coating layer abuts against an edge of the second insulating layer, and a thickness of the second insulating layer at an abutting position is greater than a thickness of the second bottom coating layer.

Optionally, the second active substance layer is disposed on a surface of the second bottom coating layer away from the current collector, and the second active substance layer is not in contact with the second insulating layer.

Optionally, in a length direction of the current collector, the current collector includes a first end and a second end, the first insulating layer extends from the first end of the current collector to a position of the current collector close to the second end, the first bottom coating layer is located at the second end of the current collector; the second insulating layer is located at the first end of the current collector, and the second bottom coating layer extends from the second end of the current collector to a position of the current collector close to the first end.

Optionally, in the length direction of the current collector, the first insulating layer includes a third end and a fourth end, the first bottom coating layer includes a fifth end and a sixth end, the thinned portion is disposed at the fourth end of the first insulating layer, and the thinned portion abuts against the fifth end of the first bottom coating layer.

Optionally, in a thickness direction of the electrode sheet, a thickness of the third end of the first insulating layer is Ta, and Ta is in a range of 3-15 µm; a thickness of the thinned portion at the fourth end of the first insulating layer is Tb, and Tb is in a range of 2-10 µm; a thickness of the first bottom coating layer is Tc, and Tc is in a range of 2-10 µm; a thickness of the second insulating layer is Td, and Td is in a range of 3-15 µm; a thickness of the second bottom coating layer is Te, and Te is in a range of 2-10 µm.

Optionally, in a thickness direction of the electrode sheet, a thickness of the first active substance layer is Tf, and Tf is in a range of 30-100 µm; a thickness of the second active substance layer is Tg, and Tg is in a range of 30-100 µm.

Optionally, in the length direction of the current collector, the first active substance layer includes a seventh end and an eighth end, a gap is provided between the seventh end of the first active substance layer and the fourth end of the first insulating layer, a length of the gap is L₁, and L₁ satisfies 0 mm≤L₁≤5 mm; the second insulating layer includes a ninth end and a tenth end, the second active substance layer includes an eleventh end and a twelfth end, a gap is provided between the tenth end of the second insulating layer and the eleventh end of the second active substance layer, a length of the gap is L₂, and L₂ satisfies 0 mm≤L₂≤5 mm.

In another aspect, the present application provides a battery, including an electrolyte, a separator, and the electrode sheet described above; the electrode sheet includes a positive electrode sheet and/or a negative electrode sheet.

In yet another aspect, the present application provides an electrical device, including the battery described above.

According to the electrode sheet provided in the present application, by making the thickness of the thinned portion of the first insulating layer equal to the thickness of the first bottom coating layer, the coating weight of the second active substance layer on the other side of the electrode sheet can be maintained at an appropriate level, thereby preventing a reduction in battery capacity. Meanwhile, because the thickness of the thinned portion of the first insulating layer is equal to the thickness of the first bottom coating layer, the rolling pressure corresponding to the second active substance layer can be maintained at an appropriate level, and the compaction density of the second active substance layer can also be maintained at an appropriate level, such that intercalation and deintercalation of lithium ions during charge and discharge are not adversely affected, lithium plating in the battery is avoided, and brittle fracture of the electrode sheet is also avoided.

### BRIEF DESCRIPTION OF THE DRAWINGS

Fig. 1 is a schematic cross-sectional structural view of an existing electrode sheet.
Fig. 2 is a schematic coating structure view of an existing electrode sheet.
Fig. 3 is a schematic cross-sectional structural view of an electrode sheet according to an embodiment of the present application.
Fig. 4 is a schematic coating structure view of an electrode sheet according to an embodiment of the present application.
Fig. 5 is a schematic cross-sectional structural view in a thickness direction of an electrode assembly according to an embodiment of the present application.

The reference numerals in the drawings of the description are as follows:
1-current collector; 11-first end; 12-second end; 2-first insulating layer; 21-third end; 22-fourth end; 23-thinned portion; 3-first bottom coating layer; 31-fifth end; 32-sixth end; 4-first active substance layer; 41-seventh end; 42-eighth end; 5-second insulating layer; 51-ninth end; 52-tenth end; 6-second bottom coating layer; 7-second active substance layer; 71-eleventh end; 72-twelfth end; 8-coating die head; 9-positive electrode sheet; 91-positive electrode current collector; 92-positive electrode insulating layer; 921-first positive electrode insulating layer; 922-second positive electrode insulating layer; 923-first thinned portion; 93-positive electrode bottom coating layer; 931-first positive electrode bottom coating layer; 932-second positive electrode bottom coating layer; 94-positive electrode active substance layer; 941-first positive electrode active substance layer; 942-second positive electrode active substance layer; 10-negative electrode sheet; 101-negative electrode current collector; 102-negative electrode active substance layer; 11-separator.

### DETAILED DESCRIPTIONS OF THE EMBODIMENTS

In order to make the technical problems to be solved, the technical solutions, and the beneficial effects of the present application clearer, the present application is further described in detail below with reference to the drawings and embodiments. It should be understood that the specific embodiments described herein are merely used to explain the present application and are not intended to limit the present application.

In the description of the present application, it should be understood that orientation or positional relationships indicated by the terms "side", "inner", "outer", and the like are based on the orientation or positional relationships shown in the drawings, are merely for ease of description of the present application and simplification of the description, and do not indicate or imply that the referenced apparatus or element must have a particular orientation or be constructed and operated in a particular orientation, and thus should not be construed as limiting the present application. In the description of the present application, unless otherwise specified, "plurality" means two or more.

In the description of the present application, it should be noted that, unless otherwise expressly specified and limited, the term "connected" should be understood in a broad sense, for example, it may be a fixed connection, a detachable connection, or an integral connection; it may be a mechanical connection or an electrical connection; it may be a direct connection or an indirect connection through an intermediate medium; and it may be internal communication between two elements. Those of ordinary skill in the art may understand the specific meanings of the above term in the present application according to specific circumstances.

As shown in Figs. 3-4, in one embodiment, the present application provides an electrode sheet, including a current collector 1, a first bottom coating layer 3, a first insulating layer 2, a first active substance layer 4, and a second active substance layer 7; the first bottom coating layer 3 and the first insulating layer 2 are disposed side by side on one side of the current collector 1, an edge of the first bottom coating layer 3 abuts against an edge of the first insulating layer 2, the first insulating layer 2 includes a thinned portion 23 at an abutting position, a thickness of the thinned portion 23 is smaller than an average thickness of the first insulating layer 2 at a non-abutting position, the thickness of the thinned portion 23 of the first insulating layer 2 is flush with a thickness of the first bottom coating layer 3, the first active substance layer 4 is disposed on a side of the first bottom coating layer 3 away from the current collector 1; the second active substance layer 7 is disposed on the other side of the current collector 1, and a projection of the second active substance layer 7 on the current collector 1 covers projections of the thinned portion 23 and the first bottom coating layer 3 on the current collector 1.

Specifically, when the second active substance layer 7 of the electrode sheet of the present application is coated by using an extrusion coating device, one side of the electrode sheet of the present application is close to the coating die head 8, and the other side of the electrode sheet of the present application is close to a coating roller. The extrusion coating device regulates an areal density of the second active substance layer 7 by allowing slurry to flow through an outlet slit of the coating die head 8 and a gap d between the coating die head 8 and a substrate under a certain pressure and a certain flow rate Q. The thickness of the thinned portion 23 of the first insulating layer 2 is flush with the thickness of the first bottom coating layer 3, such that a coating weight of the first active substance layer 4 on the other side of the electrode sheet is maintained at an appropriate level, thereby preventing low battery capacity. Meanwhile, because the thickness of the thinned portion 23 of the first insulating layer 2 is equal to the thickness of the first bottom coating layer 3, the rolling pressure in this portion is maintained at an appropriate level, and the compaction density of the second active substance layer 7 in this portion is also maintained at an appropriate level, such that intercalation and deintercalation of lithium ions during charge and discharge are not affected, lithium plating in the battery is avoided, and brittle fracture of the electrode sheet is also avoided.

As shown in Figs. 3-4, in one embodiment, a second bottom coating layer 6 and a second insulating layer 5 are disposed side by side on the other side of the current collector 1, an edge of the second bottom coating layer 6 abuts against an edge of the second insulating layer 5, and a thickness of the second insulating layer 5 at an abutting position is greater than a thickness of the second bottom coating layer 6.

The thickness of the second insulating layer 5 is greater than the thickness of the second bottom coating layer 6, the second insulating layer 5 provides a ion diffusion path but is insulating to electrons, does not affect capacity extractability of active substance in a coating region of the second active substance layer 7, improves energy density of the battery while avoiding short circuit of the battery, reduces lithium-ion transport resistance during charge and discharge, and lowers a risk of lithium plating in an electrode sheet region.

As shown in Figs. 3-4, in one embodiment, the second active substance layer 7 is disposed on a surface of the second bottom coating layer 6 away from the current collector 1, and the second active substance layer 7 is not in contact with the second insulating layer 5.

Specifically, because the second active substance layer 7 covers the surface of the second bottom coating layer 6, the second bottom coating layer 6 is unlikely to fall off under highly destructive external forces such as nail penetration and impact, thereby preventing the current collector 1 from being exposed and improving safety of the electrode assembly.

Further, the second active substance layer 7 is not in contact with the second insulating layer 5, which avoids overlapping with the second insulating layer 5 and prevents a thickness of the tenth end 52 of the second insulating layer 5 on the other side of the current collector 1 from becoming excessively large. As a result, a relatively small coating weight of the second active substance layer 7 on the other side of the current collector 1 is avoided, and a low-capacity problem of the battery is prevented.

As shown in Figs. 3-4, in one embodiment, in a length direction of the current collector 1, the current collector 1 includes a first end 11 and a second end 12, the first insulating layer 2 extends from the first end 11 of the current collector 1 to a position of the current collector 1 close to the second end 12, the first bottom coating layer 3 is located at the second end 12 of the current collector 1; the second insulating layer 5 is located at the first end of the current collector 1, and the second bottom coating layer 6 extends from the second end of the current collector 1 to a position of the current collector 1 close to the first end.

Specifically, the first insulating layer 2 is located at the first end 11 of the current collector 1, the first bottom coating layer 3 is located at the second end 12 of the current collector 1, and the thinned portion 23 of the first insulating layer 2 abuts against an end of the first bottom coating layer 3. The thickness of the thinned portion 23 of the first insulating layer 2 is equal to the thickness of the first bottom coating layer 3, such that a coating weight of the first active substance layer 4 on the other side of the electrode sheet is maintained at an appropriate level, and thus low battery capacity is avoided. In addition, the first insulating layer 2 and the first bottom coating layer 3 completely cover a surface of the electrode sheet, and no gap exists in the length direction of the electrode sheet, such that the current collector 1 is unlikely to be exposed when subjected to external impact or penetration.

As shown in Figs. 3-4, in one embodiment, in a length direction of the current collector 1, the first insulating layer 2 includes a third end 21 and a fourth end 22, the first bottom coating layer 3 includes a fifth end 31 and a sixth end 32, the thinned portion 23 is disposed at the fourth end 22 of the first insulating layer 2, and the thinned portion 23 abuts against the fifth end 31 of the first bottom coating layer 3.

Specifically, the thinned portion 23 is disposed at the fourth end 22 of the first insulating layer 2, and the thinned portion 23 abuts against the fifth end 31 of the first bottom coating layer 3. The thickness of the thinned portion 23 of the first insulating layer 2 is equal to the thickness of the first bottom coating layer 3. As a result, a coating weight of the first active substance layer 4 on the other side of the electrode sheet is maintained at an appropriate level, and low battery capacity is avoided. In addition, the first insulating layer 2 and the first bottom coating layer 3 completely cover a surface of the electrode sheet, no gap exists in the length direction of the electrode sheet, and the current collector 1 is better insulated and isolated, thereby providing higher safety performance.

Further, a length of the thinned portion 23 depends on a width and a thickness of the battery. When the width of the battery is relatively small, and/or the thickness of the battery is relatively thin, the length of the thinned portion 23 is relatively short; conversely, when the width of the battery is relatively large, and/or the thickness of the battery is relatively thick, the length of the thinned portion 23 is relatively long.

As shown in Figs. 3-4, in one embodiment, in a thickness direction of the electrode sheet, a thickness of the third end 21 of the first insulating layer 2 is Ta, and Ta is in a range of 3-15 µm; a thickness of the thinned portion 23 at the fourth end 22 of the first insulating layer 2 is Tb, and Tb is in a range of 2-10 µm; a thickness of the first bottom coating layer 3 is Tc, and Tc is in a range of 2-10 µm; a thickness of the second insulating layer 5 is Td, and Td is in a range of 3-15 µm; and a thickness of the second bottom coating layer 6 is Te, and Te is in a range of 2-10 µm.

In preferred embodiments, the thickness of the third end 21 of the first insulating layer 2 is 5-10 µm; for example, the thickness may be 3 µm, 4 µm, 5 µm, 6 µm, 7 µm, 8 µm, 9 µm, 10 µm, 11 µm, 12 µm, 13 µm, 14 µm, and 15 µm, or may be in a range defined by any two of these values.

In preferred embodiments, the thickness of the thinned portion 23 at the fourth end 22 of the first insulating layer 2 is 5-8 µm; for example, the thickness may be 2 µm, 3 µm, 4 µm, 5 µm, 6 µm, 7 µm, 8 µm, 9 µm, and 10 µm, or may be in a range defined by any two of these values.

In preferred embodiments, the thickness of the first bottom coating layer 3 is 5-8 µm; for example, the thickness may be 2 µm, 3 µm, 4 µm, 5 µm, 6 µm, 7 µm, 8 µm, 9 µm, and 10 µm, or may be in a range defined by any two of these values.

In preferred embodiments, the thickness of the second insulating layer 5 is 5-10 µm; for example, the thickness may be 3 µm, 4 µm, 5 µm, 6 µm, 7 µm, 8 µm, 9 µm, 10 µm, 11 µm, 12 µm, 13 µm, 14 µm, and 15 µm, or may be in a range defined by any two of these values.

In preferred embodiments, the thickness of the second bottom coating layer 6 is 5-8 µm; for example, the thickness may be 2 µm, 3 µm, 4 µm, 5 µm, 6 µm, 7 µm, 8 µm, 9 µm, and 10 µm, or may be in a range defined by any two of these values.

As shown in Figs. 3-4, in one embodiment, in a thickness direction of the electrode sheet, a thickness of the first active substance layer 4 is Tf, and Tf is in a range of 30-100 µm; a thickness of the second active substance layer 7 is Tg, and Tg is in a range of 30-100 µm.

In preferred embodiments, the thickness of the first active substance layer 4 is 50-80 µm; for example, the thickness may be 30 µm, 35 µm, 90 µm, 45 µm, 50 µm, 55 µm, 60 µm, 65 µm, 70 µm, 75 µm, 80 µm, 85 µm, 90 µm, 95 µm, and 100 µm, or may be in a range defined by any two of these values.

In preferred embodiments, the thickness of the second active substance layer 7 is 50-80 µm; for example, the thickness may be 30 µm, 35 µm, 90 µm, 45 µm, 50 µm, 55 µm, 60 µm, 65 µm, 70 µm, 75 µm, 80 µm, 85 µm, 90 µm, 95 µm, and 100 µm, or may be in a range defined by any two of these values.

As shown in Figs. 3-4, in one embodiment, in a length direction of the current collector 1, the first active substance layer 4 includes a seventh end 41 and an eighth end 42, a gap is provided between the seventh end 41 of the first active substance layer 4 and the fourth end 22 of the first insulating layer 2, a length of the gap is L₁, and L₁ satisfies 0 mm≤L₁≤5 mm; the second insulating layer 5 includes a ninth end 51 and a tenth end 52, the second active substance layer 7 includes an eleventh end 71 and a twelfth end 72, a gap is provided between the tenth end 52 of the second insulating layer 5 and the eleventh end 71 of the second active substance layer 7, a length of the gap is L₂, and L₂ satisfies 0 mm≤L₂≤5 mm.

In some embodiments, a distance between an edge of the seventh end 41 of the first active substance layer 4 in the length direction of the current collector 1 and an edge of the fourth end 22 of the first insulating layer 2 in the length direction of the current collector 1 is greater than or equal to 0 mm. That is, a length of a gap between the first active substance layer 4 and the first insulating layer 2 in the length direction of the current collector 1 is greater than or equal to 0 mm.

In preferred embodiments, the length of the gap between the first active substance layer 4 and the first insulating layer 2 in the length direction of the electrode sheet is 2 mm; for example, the length may be 0.5 mm, 1 mm, 1.5 mm, 2.0 mm, 2.5 mm, 3.0 mm, 3.5 mm, 4.0 mm, 4.5 mm, and 5 mm, or may be in a range defined by any two of these values.

In some embodiments, a distance between an edge of the eleventh end 71 of the second active substance layer 7 in the length direction of the current collector 1 and an edge of the tenth end 52 of the second insulating layer 5 in the length direction of the current collector 1 is greater than or equal to 0 mm. That is, a length of a gap between the second active substance layer 7 and the second insulating layer 5 in the length direction of the current collector 1 is greater than or equal to 0 mm.

In preferred embodiments, the length of the gap between the second active substance layer 7 and the second insulating layer 5 in the length direction of the electrode sheet is 2 mm; for example, the length may be 0.5 mm, 1 mm, 1.5 mm, 2.0 mm, 2.5 mm, 3.0 mm, 3.5 mm, 4.0 mm, 4.5 mm, and 5 mm, or may be in a range defined by any two of these values.

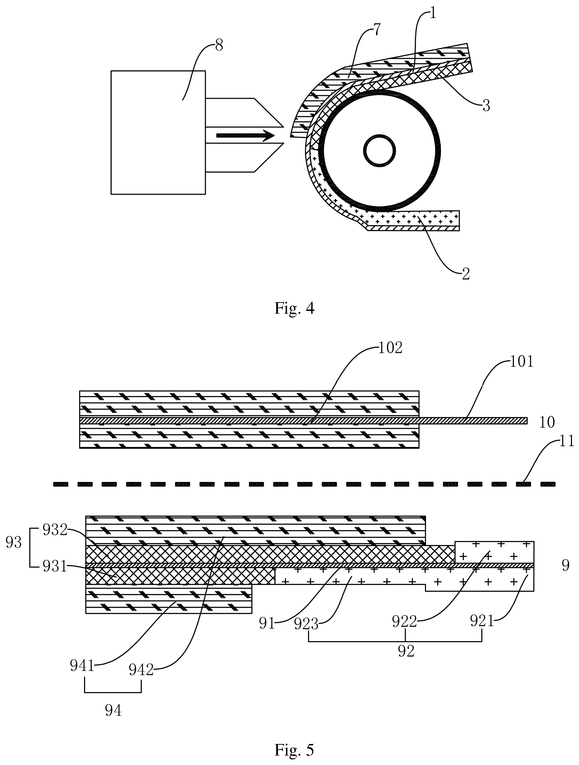

As shown in Fig. 5, in one embodiment, the present application provides a battery, including an electrolyte, a separator 11, and the electrode sheet described above; the electrode sheet includes a positive electrode sheet 9 and/or a negative electrode sheet 10.

Specifically, the positive electrode sheet 9 includes a positive electrode current collector 91, a positive electrode bottom coating layer 93, a positive electrode insulating layer 92, and a positive electrode active substance layer 94; the positive electrode bottom coating layer 93 includes a first positive electrode bottom coating layer 931 and a second positive electrode bottom coating layer 932, the positive electrode insulating layer 92 includes a first positive electrode insulating layer 921 and a second positive electrode insulating layer 922, and the positive electrode active substance layer 94 includes a first positive electrode active substance layer 941 and a second positive electrode active substance layer 942.

The first positive electrode bottom coating layer 931 and the first positive electrode insulating layer 921 are disposed side by side on one side of the positive electrode current collector 91, an edge of the first positive electrode bottom coating layer 931 abuts against an edge of the first positive electrode insulating layer 921, the first positive electrode insulating layer 921 includes a first thinned portion 923 at an abutting position, a thickness of the first thinned portion 923 is smaller than an average thickness of the first positive electrode insulating layer 921 at a non-abutting position, and the thickness of the first thinned portion 923 of the first positive electrode insulating layer 921 is equal to the thickness of the first positive electrode bottom coating layer 931; the first positive electrode active substance layer 941 is disposed on a surface of the first positive electrode bottom coating layer 931 away from the positive electrode current collector 91, and the first positive electrode active substance layer 941 is not in contact with the first positive electrode insulating layer 921.

The second positive electrode bottom coating layer 932 and the second positive electrode insulating layer 922 are disposed side by side on the other side of the positive electrode current collector 91, an edge of the second positive electrode bottom coating layer 932 abuts against an edge of the second positive electrode insulating layer 922, a thickness of the second positive electrode insulating layer 922 at an abutting position is greater than a thickness of the second positive electrode bottom coating layer 932; the second positive electrode active substance layer 942 is disposed on a surface of the second positive electrode bottom coating layer 932 away from the positive electrode current collector 91, and the second positive electrode active substance layer 942 is not in contact with the second positive electrode insulating layer 922.

Specifically, the positive electrode current collector 91 may be aluminum foil or nickel foil; further, other positive electrode current collectors 91 commonly used in the art may also be used.

Specifically, the positive electrode bottom coating layer 93 includes a first positive electrode active substance, a first conductive agent, a first insulating inorganic filler, and a first binder. The first positive electrode active substance includes one or more selected from the group consisting of lithium iron phosphate, lithium manganese iron phosphate, sodium iron phosphate, lithium vanadium phosphate, sodium vanadium phosphate, lithium vanadium oxyphosphate, sodium vanadium oxyphosphate, lithium vanadate, and lithium manganate. The first conductive agent includes one or more selected from the group consisting of carbon nanotubes, conductive carbon black, acetylene black, graphene, Ketjen black, and carbon fiber. The first insulating inorganic filler includes one or more selected from the group consisting of alumina ceramic, boehmite, magnesium oxide, and magnesium hydroxide. The first binder includes one or more selected from the group consisting of polyvinylidene fluoride, a copolymer of vinylidene fluoride and hexafluoropropylene, polyamide, polyacrylonitrile, polyacrylate, polyacrylic acid, a polyacrylic acid copolymer, polyacrylate salt, sodium carboxymethyl cellulose, polyvinylpyrrolidone, polyvinyl ether, polymethyl methacrylate, polytetrafluoroethylene, polyhexafluoropropylene, and styrene-butadiene rubber.

Specifically, the positive electrode insulating layer 92 includes a first insulating substance and a second binder.

The first insulating substance includes boehmite and magnesium oxide. Boehmite has favorable insulating properties and thermal stability, and is used as an insulating layer coated on the current collector to prevent occurrence of internal short circuit. However, boehmite has a relatively low coefficient of thermal expansion and a low thermal conductivity. Magnesium oxide is also used as an insulating material, and exhibits a high coefficient of thermal expansion and a high thermal conductivity. In addition, the coefficient of thermal expansion of magnesium oxide increases as temperature rises. When short circuit of the aluminum foil occurs, or when the magnesium oxide coated around the aluminum foil expands upon heating, further short circuit can be prevented, thereby improving safety under conditions such as nail penetration.

The second binder includes one or more selected from the group consisting of polyvinylidene fluoride, a copolymer of vinylidene fluoride and hexafluoropropylene, polyamide, polyacrylonitrile, polyacrylate, polyacrylic acid, a polyacrylic acid copolymer, polyacrylate salt, sodium carboxymethyl cellulose, polyvinylpyrrolidone, polyvinyl ether, polymethyl methacrylate, polytetrafluoroethylene, polyhexafluoropropylene, and styrene-butadiene rubber.

The second binder enables better adhesion between the insulating substance and the positive electrode current collector 91, avoids the insulating substance from falling off from the surface of the positive electrode current collector 91, and thus prevents short circuit between positive electrode sheets 9 when the battery is subjected to external impact or penetration, thereby improving safety performance of the battery and the electrical device.

Specifically, the positive electrode active substance layer 94 includes a second positive electrode active substance, a second conductive agent, and a third binder.

In one embodiment, the second positive electrode active substance includes one or more selected from the group consisting of lithium cobalt oxide, lithium vanadate, lithium manganate, lithium nickel oxide, lithium nickel cobalt manganese oxide, lithium-rich manganese-based material, lithium nickel cobalt aluminum oxide, and lithium titanate; the second conductive agent includes one or more selected from the group consisting of carbon nanotubes, conductive carbon black, acetylene black, graphene, Ketjen black, and carbon fiber; and the third binder includes one or more selected from the group consisting of polyvinylidene fluoride, a copolymer of vinylidene fluoride and hexafluoropropylene, polyamide, polyacrylonitrile, polyacrylate, polyacrylic acid, a polyacrylic acid copolymer, polyacrylate salt, sodium carboxymethyl cellulose, polyvinylpyrrolidone, polyvinyl ether, polymethyl methacrylate, polytetrafluoroethylene, polyhexafluoropropylene, and styrene-butadiene rubber; and the third binder includes one or more selected from the group consisting of polyvinylidene fluoride, a copolymer of vinylidene fluoride and hexafluoropropylene, polyamide, polyacrylonitrile, polyacrylate, polyacrylic acid, a polyacrylic acid copolymer, polyacrylate salt, sodium carboxymethyl cellulose, polyvinylpyrrolidone, polyvinyl ether, polymethyl methacrylate, polytetrafluoroethylene, polyhexafluoropropylene, and styrene-butadiene rubber.

Specifically, the negative electrode sheet 10 includes a negative electrode current collector 101 and a negative electrode active substance layer 102, and the negative electrode active substance layer 102 is coated on both sides of the negative electrode current collector 101.

Specifically, the negative electrode current collector 101 is selected from metal materials capable of conducting electrons. Preferably, the negative electrode current collector 101 includes metals such as stainless steel, Al, Ni, tin, copper, nickel, titanium, and iron, or alloys thereof. In more preferred embodiments, the negative electrode current collector 101 is selected from copper foil.

Specifically, the negative electrode active substance layer 102 includes a negative electrode active substance, a conductive agent, and a binder.

In one embodiment, the negative electrode active substance includes one or more selected from the group consisting of natural graphite, artificial graphite, hard carbon, silicon material, and lithium metal material; the conductive agent includes one or more selected from the group consisting of graphite, super conductive carbon, acetylene black, carbon black, Ketjen black, carbon dots, carbon nanotubes, graphene, and carbon nanofiber; and the binder includes one or more selected from the group consisting of styrene-butadiene rubber (SBR), polyvinylidene fluoride (PVDF), polytetrafluoroethylene (PTFE), polyvinyl butyral (PVB), water-based acrylic resin (water-based acrylic resin), polyacrylic acid (PAA), carboxymethyl cellulose (CMC), and modified carboxymethyl cellulose material.

Specifically, the separator 11 may be various separator 11 materials suitable for lithium-ion batteries in the art. For example, the separator 11 material may be one or more selected from the group consisting of, but not limited to, single-layer PP (polypropylene), single-layer PE (polyethylene), polyvinylidene fluoride, aramid, polyethylene terephthalate, polytetrafluoroethylene, polyacrylonitrile, polyimide, polyamide, polyester, and natural fiber, or a combination of two or more thereof.

The battery of the present application further includes an electrolytic medium, and the electrolytic medium may be one or more selected from the group consisting of a gel electrolyte, a solid electrolyte, and an electrolyte. The electrolyte includes a lithium salt and a non-aqueous solvent.

In some embodiments, a preparation method of the battery used is as follows. The above positive electrode sheet 9, separator 11, and negative electrode sheet 10 are wound or stacked in sequence to form an electrode assembly, and then the electrode assembly is placed into, for example, an aluminum-plastic film, followed by injection of an electrolyte, formation, and packaging, thereby obtaining a lithium-ion battery.

Although some of the above exemplary embodiments are illustrated using a lithium-ion battery as an example, those skilled in the art, upon reading the present application, can understand that, without departing from the spirit of the present application, specific examples of the battery of the present application may include all types of primary batteries or secondary batteries. In particular, the battery is a lithium secondary battery, including a lithium metal secondary battery, a lithium-ion secondary battery, a lithium polymer secondary battery, or a lithium-ion polymer secondary battery.

In yet another aspect, the present application provides an electrical device, including the battery described above.

The electrical device according to the embodiments of the present application is not particularly limited, and may be any electrical device known in the art. In some embodiments, the electrical device may include, but is not limited to, an e-cigarette, an electronic vapor device, a wireless earphone, a robotic vacuum cleaner, an unmanned aerial vehicle, a notebook computer, a pen-input computer, a mobile computer, an electronic book player, a portable telephone, a portable facsimile machine, a portable photocopier, a portable printer, a headset stereo, a video recorder, a liquid crystal television, a portable cleaner, a portable CD player, a mini disc, a transceiver, an electronic organizer, a calculator, a memory card, a portable recorder, a radio, a backup power supply, a motor, an automobile, a motorcycle, an electric bicycle, a bicycle, a lighting fixture, a toy, a game console, a watch or clock, an electric tool, a flash, a camera, a household large-scale storage battery, and a lithium-ion capacitor.

The above descriptions are only preferred embodiments of the present application, and are not intended to limit the present application. Any modifications, equivalent replacements, improvements, made within the spirit and principle of the present application shall fall within the protection scope of the present application.

## Claims

1. An electrode sheet, comprising a current collector, a first bottom coating layer, a first insulating layer, a first active substance layer, and a second active substance layer; wherein the first bottom coating layer and the first insulating layer are disposed side by side on one side of the current collector, an edge of the first bottom coating layer abuts against an edge of the first insulating layer, the first insulating layer comprises a thinned portion at an abutting position, a thickness of the thinned portion is smaller than an average thickness of the first insulating layer at a non-abutting position, the thickness of the thinned portion of the first insulating layer is flush with a thickness of the first bottom coating layer, the first active substance layer is disposed on a side of the first bottom coating layer away from the current collector; the second active substance layer is disposed on the other side of the current collector, and a projection of the second active substance layer on the current collector covers projections of the thinned portion and the first bottom coating layer on the current collector.

2. The electrode sheet of claim 1, wherein a second bottom coating layer and a second insulating layer are disposed side by side on the other side of the current collector, an edge of the second bottom coating layer abuts against an edge of the second insulating layer, and a thickness of the second insulating layer at an abutting position is greater than a thickness of the second bottom coating layer.

3. The electrode sheet of any one of claims 1-2, wherein the second active substance layer is disposed on a surface of the second bottom coating layer away from the current collector, and the second active substance layer is not in contact with the second insulating layer.

4. The electrode sheet of claim 3, wherein, in a length direction of the current collector, the current collector comprises a first end and a second end, the first insulating layer extends from the first end of the current collector to a position of the current collector close to the second end, the first bottom coating layer is located at the second end of the current collector; the second insulating layer is located at the first end of the current collector, and the second bottom coating layer extends from the second end of the current collector to a position of the current collector close to the first end.

5. The electrode sheet of claim 4, wherein, in the length direction of the current collector, the first insulating layer comprises a third end and a fourth end, the first bottom coating layer comprises a fifth end and a sixth end, the thinned portion is disposed at the fourth end of the first insulating layer, and the thinned portion abuts against the fifth end of the first bottom coating layer.

6. The electrode sheet of claim 5, wherein, in a thickness direction of the electrode sheet, a thickness of the third end of the first insulating layer is Ta, and Ta is in a range of 3-15 µm; a thickness of the thinned portion at the fourth end of the first insulating layer is Tb, and Tb is in a range of 2-10 µm; a thickness of the first bottom coating layer is Tc, and Tc is in a range of 2-10 µm; a thickness of the second insulating layer is Td, and Td is in a range of 3-15 µm; a thickness of the second bottom coating layer is Te, and Te is in a range of 2-10 µm.

7. The electrode sheet of claim 5, wherein, in a thickness direction of the electrode sheet, a thickness of the first active substance layer is Tf, and Tf is in a range of 30-100 µm; a thickness of the second active substance layer is Tg, and Tg is in a range of 30-100 µm.

8. The electrode sheet of claim 6, wherein, in the length direction of the current collector, the first active substance layer comprises a seventh end and an eighth end, a gap is provided between the seventh end of the first active substance layer and the fourth end of the first insulating layer, a length of the gap is L₁, and L₁ satisfies 0 mm≤L₁≤5 mm; the second insulating layer comprises a ninth end and a tenth end, the second active substance layer comprises an eleventh end and a twelfth end, a gap is provided between the tenth end of the second insulating layer and the eleventh end of the second active substance layer, a length of the gap is L₂, and L₂ satisfies 0 mm≤L₂≤5 mm.

9. A battery, comprising an electrolyte, a separator, and the electrode sheet of any one of claims 1-8, wherein the electrode sheet comprises a positive electrode sheet and/or a negative electrode sheet.

10. An electrical device, comprising the battery of claim 9.
